# FASCICULE DE BREVET EUROPEEN

(11) **EP 2 532 417 B1**
(45) Date de publication et mention de la délivrance du brevet: **03.06.2015**
(21) Numéro de dépôt: 12165451.1
(22) Date de dépôt: 25.04.2012
(51) Int. Cl.: B01F 3/02, G05D 11/13

(54) **Installation de conditionnement de monoxyde d'azote utilisant des débitmètres massiques**
Misch- und Abfüllungstation für Stickstoffmonoxid mit Massendurchflussmessgeräten
Nitrogen monoxide blending and filling facility using mass flowmeters

(30) Priorité: 09.06.2011 FR 1155036
(43) Date de publication de la demande: 12.12.2012
(73) Titulaire: L'AIR LIQUIDE, SOCIETE ANONYME POUR L'ETUDE ET L'EXPLOITATION DES PROCEDES GEORGES CLAUDE, 75007 Paris (FR); Air Liquide Santé France, 75007 Paris (FR)
(72) Inventeur: Deck, Philippe, 93100 Montreuil (FR); Legeron, Wilfried, 75015 Paris (FR); Valsasina, Luca, 92100 Boulogne Billancourt (FR)
(74) Mandataire: Pittis, Olivier

(56) Documents cités:
- EP-A1- 0 671 680
- EP-A2- 1 811 224
- FR-A1- 2 811 909

## Description

L'invention concerne une installation de conditionnement d'un mélange gazeux NO/N₂ dans des récipients de gaz, en particulier une ou plusieurs bouteilles de gaz, mettant en oeuvre des débitmètres massiques, et procédé de conditionnement associé.

Les mélanges gazeux NO/N₂ sont couramment utilisés pour traiter les vasoconstrictions pulmonaires chez l'adulte ou l'enfant, en particulier chez les nouveaux nés souffrant d'hypertension pulmonaire primitive ou chez les patients subissant une opération de chirurgie cardiaque.

Ces mélanges NO/N₂ sont classiquement conditionnés dans des bouteilles de gaz en acier. Typiquement, ces bouteilles contiennent de 100 à 1000 ppm en volume de NO et de l'azote (N₂) pour le reste. Ces bouteilles ont habituellement une contenance en eau de 2 à 50 litres, ce qui permet d'y introduire une charge totale pouvant aller jusqu'à 15 m³ de mélange NO/N₂ en fonction de la pression de remplissage, par exemple une pression finale de l'ordre de 200 à 300 bar.

Le conditionnement, c'est-à-dire la mise en bouteille de ces mélanges, se fait dans des centres de conditionnement de gaz.

Toutefois, compte-tenu de la faible teneur en NO dans le mélange, à savoir typiquement de l'ordre de quelques centaines de ppm en volume, le conditionnement de ces mélanges n'est pas toujours aisé à réaliser au plan industriel et une précision suffisante du mélange obtenu n'est pas toujours assurée.

En particulier, le procédé de conditionnement actuel de ce type de mélanges NO/N₂ est basé sur une mesure de la pression de NO introduit dans les bouteilles et calcul de la pression cible de NO en fonction de la température, d'une part, et sur une pesée de la quantité d'azote dans les bouteilles avec comparaison de cette pesée avec celle d'une bouteille témoin, d'autre part.

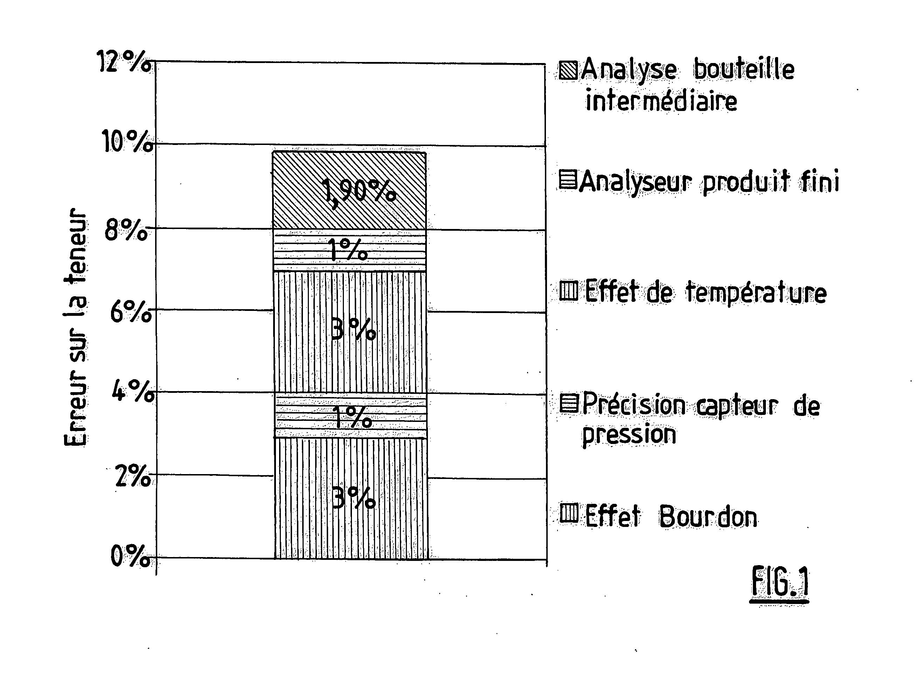

Or, comme illustré en Figure 1, ce procédé connu conduit à une faible précision de mélange du fait de plusieurs facteurs négatifs qui se cumulent les uns aux autres, à savoir :
- un effet Bourdon exercé au niveau du flexible de la bascule servant à la pesée du gaz ;
- une précision limitée du capteur de pression de NO ; et
- un effet négatif de la température car la quantité de NO est déterminée au moyen de l'équation thermodynamique suivante : PV = ZnRT, qui est influencée par la température T du gaz.

Par ailleurs, le document FR -A- 2 811 909 enseigne un procédé de fabrication de mélanges gazeux en dynamique mettant en oeuvre une chambre de mélange recevant des flux gazeux issus de plusieurs sources de sorte de créer le mélange gazeux désiré, en particulier un mélange de protoxyde d'azote et d'oxygène, lequel est ensuite envoyé vers des rampes de conditionnement.

En outre, le document EP -A- 1 811224 enseigne un mélange de gaz avec remplissage avec contrôle de pression et mise en oeuvre d'une mesure de débit massique par des détecteurs de flux afin de remplir des récipients de gaz à une vitesse de mélange prédéfinie.

Enfin, le document EP - A - 671 680 propose un système de mélange automatique pour mélange des gaz, tel l'hélium et l'azote, via des lignes de gaz à orifices calibrés. Une vanne d'ajustage automatique est prévue pour répondre aux variations de pression, de température et de débit.

Le problème est dès lors de proposer un procédé de conditionnement amélioré permettant d'assurer une bonne précision et une fiabilité accrue du mélange gazeux ainsi fabriqué et conditionné, lequel ne soit pas ou beaucoup moins sensible aux facteurs négatifs susmentionnés.

La solution de l'invention est alors une installation de conditionnement d'un mélange gazeux NO/N₂ dans au moins un récipient, de préférence dans simultanément plusieurs récipients, comprenant :
- une source de NO gazeux,
- une source d'azote gazeux,
- au moins une rampe de remplissage comprenant un ou plusieurs postes de remplissage d'un ou plusieurs récipients de gaz,
- une première canalisation de gaz reliant fluidiquement la source de NO gazeux à ladite au moins une rampe de remplissage, et
- une deuxième canalisation de gaz reliant fluidiquement la source d'azote gazeux à ladite au moins une rampe de remplissage,
**caractérisée en ce que** :
- la source de NO gazeux contient un prémélange gazeux formé de NO et d'azote, et
- la première canalisation de gaz et la deuxième canalisation de gaz comprennent chacune un débitmètre massique, chaque débitmètre massique étant raccordé à un dispositif de pilotage coopérant avec chaque débitmètre massique.

Selon le cas, l'installation de l'invention peut comprendre l'une ou plusieurs des caractéristiques techniques suivantes :
- la première canalisation de gaz et la deuxième canalisation de gaz sont connectées fluidiquement l'une à l'autre en amont de ladite au moins une rampe de remplissage.
- la source de NO contient un prémélange gazeux formé de NO et de N₂ contenant une teneur en NO inférieure à 40% en volume, de préférence une teneur en NO inférieure ou égale à 30% en volume, de préférence encore une teneur en NO inférieure ou égale à 20% en volume.
- la source de NO contient un prémélange gazeux formé de NO et de N₂ contenant une teneur en NO inférieure à 10% en volume, de préférence le prémélange contient une teneur en NO inférieure ou égale à 5% en volume, typiquement de l'ordre de 4% en volume de NO et le reste étant de l'azote.
- la source de NO comprend un ou plusieurs récipients de gaz.
- la source d'azote gazeux est un réservoir d'azote liquide ou gazeux, ou une canalisation d'alimentation en azote gazeux. Dans le cas où la source d'azote gazeux est un réservoir d'azote liquide, on prévoit un réchauffeur de gaz pour vaporiser l'azote liquide et obtenir ainsi de l'azote gazeux.
- elle comprend une ligne de mise à l'air reliée fluidiquement à la première canalisation de gaz et communiquant avec l'atmosphère ambiante.
- la ligne de balayage gazeux et la ligne de mise à l'air comprennent chacune au moins une vanne de contrôle de passage de gaz.
- le dispositif de pilotage reçoit de chaque débitmètre massique des signaux de masse de gaz représentatif de la masse de gaz traversant chaque débitmètre massique.
- le dispositif de pilotage est conçu pour et apte à utiliser lesdits signaux de masse de gaz représentatif de la masse de gaz traversant chaque débitmètre massique pour calculer une ou plusieurs consigne de masse cible.
- le dispositif de pilotage agit sur une vanne de régulation permettant de contrôler le débit de gaz allant vers la ou les rampes et d'arrêter le débit une fois la consigne de masse atteinte, et par ailleurs sur une vanne bipasse 30, de préférence montée en parallèle de la vanne de régulation, et qui est ouverte à un instant T donné, par exemple en milieu de remplissage, pour augmenter le débit allant vers la ou les rampes et raccourcir ainsi le temps de remplissage.
- la première canalisation de gaz et la deuxième canalisation de gaz reliées fluidiquement à ladite au moins une rampe de remplissage par l'intermédiaire d'un tronçon de canalisation commun.
- elle comprend une ligne de balayage gazeux reliant fluidiquement la deuxième canalisation de gaz, c'est-à-dire la ligne d'amenée d'azote, à la partie aval du tronçon commun alimentant au moins une rampe de remplissage en gaz et/ou à la partie amont de la première canalisation de gaz, c'est-à-dire la ligne d'amenée de NO. La ligne de balayage gazeux permet donc d'amener de l'azote jusqu'au niveau des flexibles de remplissage sous pression de manière à les maintenir sous pression et à éviter les entrées ou infiltrations d'air non seulement au niveau desdits flexibles mais aussi au niveau des connexions entre la première canalisation de gaz et de la ou des sources de NO.
- le tronçon commun se ramifie en sous-tronçons pour relier plusieurs rampes de remplissage et ainsi les alimenter simultanément en gaz.
- la ligne de balayage gazeux relie fluidiquement la deuxième canalisation de gaz auxdits sous-tronçons alimentant en gaz plusieurs rampes de remplissage. Ceci permet d'alimenter chaque sous-tronçon en azote.
- elle comprend une canalisation de purge, encore appelée circuit de purge, reliant fluidiquement la ou les rampes de remplissage à l'atmosphère.
- la canalisation de purge comprend une sortie vers l'atmosphère, de préférence le passage du gaz vers la sortie vers l'atmosphère est contrôlé par une vanne de contrôle.
- la canalisation de purge est reliée fluidiquement à une ligne de pompage comprenant une pompe à vide. La pompe à vide comprend une sortie refoulant le gaz pompé vers l'atmosphère. Cette pompe à vide permet de mettre sous vide, c'est-à-dire en dépression, notamment les bouteilles lors des phases de purge des bouteilles précédant leur remplissage proprement dit, comme expliqué ci-après.
- la canalisation de purge est reliée fluidiquement à chaque rampe par l'intermédiaire du tronçon commun et/ou des sous-tronçons reliant les première et deuxième canalisations de gaz à ou aux rampes.
- le dispositif de pilotage comprend un ordinateur ou un automate, tel un automate programmable. Le dispositif de pilotage met en oeuvre un logiciel.
- ladite au moins une rampe de remplissage comprend des organes de raccordement permettant de raccorder plusieurs récipients à la fois, de préférence de 1 à 20 bouteilles de gaz.
- le récipient est une bouteille de gaz, de préférence une bouteille de gaz à corps en acier, en aluminium ou un alliage d'aluminium.

L'invention concerne également un procédé de conditionnement d'un mélange gazeux NO/N₂ dans un ou plusieurs récipients de gaz, dans lequel on met en oeuvre une installation selon l'invention pour remplir le ou les récipients de gaz, les proportions de NO et de N₂ introduites dans le ou les récipients de gaz étant déterminées au moyen de débitmètres massiques.

Selon le procédé, le NO provient d'une source de NO contenant un prémélange gazeux formé de NO et de N₂ dont la teneur en NO est inférieure à 40% en volume, de préférence une teneur en NO inférieure ou égale à 30% en volume, de préférence encore une teneur en NO inférieure ou égale à 20% en volume, avantageusement inférieure à 10% en volume.

De préférence, les mélanges gazeux NO/N₂ conditionnés en bouteilles de gaz par mise en oeuvre du procédé et/ou de l'installation de l'invention contiennent une teneur finale en NO comprise entre 100 et 1200 ppm en volume, de préférence entre 100 et 1000 ppm, le reste étant de l'azote.

L'invention va maintenant être mieux comprise grâce à la description donnée ci-après en référence aux Figures annexées parmi lesquelles :
- la Figure 1 illustre les imprécisions de teneur en NO obtenues avec un procédé et une installation de conditionnement classique ;
- la Figure 2 illustre la précision de teneur en NO obtenue avec le procédé et l'installation de conditionnement de l'invention ;
- la Figure 3 illustre un mode de réalisation d'une installation selon l'invention ; et
- La Figure 4 schématise un cycle de conditionnement de mélanges gazeux NO/N₂ pouvant être mis en oeuvre par l'installation de la Figure 3.

La Figure 1 représente les erreurs de teneur en NO maximales possibles lorsqu'un mélange NO/azote (225 ppm ; pression finale environ 180 bar) est fabriqué et conditionné dans des bouteilles de gaz type B5 (contenance en eau de 5 litres) avec un procédé et une installation selon l'art antérieur mettant en oeuvre, comme expliqué ci-avant, une mesure de la pression de NO et une pesée de la quantité d'azote dans chaque bouteille par comparaison avec une bouteille témoin.

Comme on le voit, on constate une erreur potentielle maximale de teneur en NO de quasiment 10% engendrée par plusieurs facteurs négatifs qui se cumulent les uns aux autres, dont 7% sont liés simplement à l'effet Bourdon exercé au niveau du flexible de la bascule servant à la pesée, à une précision limitée du capteur de pression de NO ; et à un effet négatif de la température.

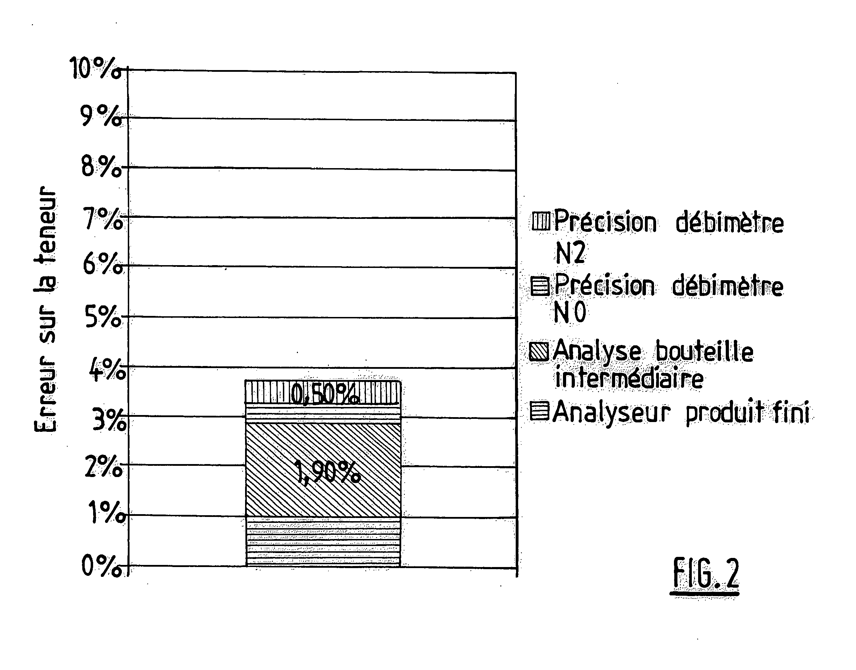

A titre comparatif, comme illustré en Figure 2, grâce à une installation selon l'invention dont le fonctionnement est basé sur la mise en oeuvre de débitmètres massiques sur la ligne d'amenée du gaz contenant le NO et sur celle amenant l'azote, il est possible de réduire fortement cette erreur ou imprécision de teneur en NO jusqu'à moins de 1 % environ au total, c'est-à-dire en réduisant l'erreur de mesure de 7% à environ 0,85% qui correspond au seuil de précision des débitmètres massiques.

En effet, l'utilisation de débitmètres massiques permet de s'affranchir des facteurs négatifs suscités puisqu'aucune pesée n'ayant lieu, l'effet Bourdon est supprimé, aucun capteur de NO n'est nécessaire pour mesurer la pression de NO et la température n'est pas prise en compte puisque la conversion de pression en masse ne se fait plus via l'équation susmentionnée qui dépend de la température.

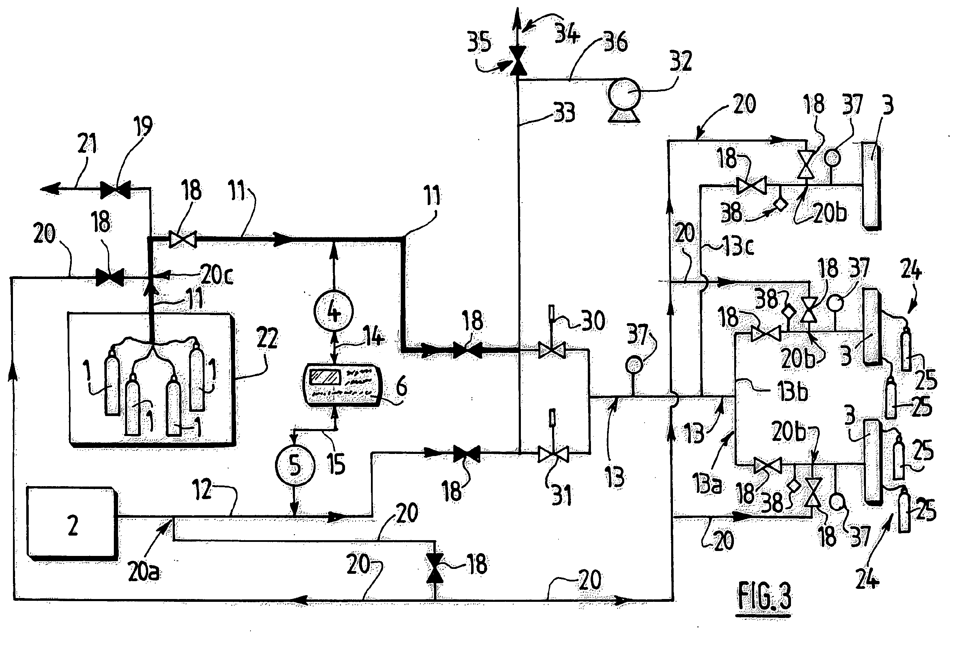

La Figure 3 schématise un mode de réalisation d'une installation de conditionnement selon l'invention laquelle est utilisée pour fabriquer des mélanges NO/N₂ contenant des teneurs en NO de l'ordre de 100 à 1200 ppm en volume, le reste étant uniquement de l'azote.

Cette installation de conditionnement comprend une source de NO gazeux 1, par exemple une ou plusieurs bouteilles de gaz contenant un prémélange de NO et d'azote, par exemple un mélange NO/N₂ à environ 4% en volume de NO, ainsi qu'une source d'azote gazeux 2, par exemple un réservoir d'azote gazeux ou liquide, ou encore une ligne ou un réseau d'alimentation en azote. Dans le cas où la source d'azote gazeux 2 est un réservoir d'azote liquide, on prévoit un réchauffeur de gaz (non montré) en aval de la source 2 pour vaporiser l'azote liquide et obtenir ainsi de l'azote gazeux.

De façon classique, on utilise une ou plusieurs rampes de remplissage 3 comprenant chacune plusieurs postes de remplissage 24, avec ou sans vanne individuelle pour chaque récipient 25, par exemple de 10 à 20 postes de remplissage 24, pour remplir simultanément plusieurs récipients 25, telles des bouteilles de gaz en acier ou en aluminium, avec le mélange NO/N₂ désiré.

Sur la Figure 3, trois rampes de remplissage 3 ont été représentées, lesquelles sont alimentées par les première et deuxième canalisations de gaz 11, 12.

Plus précisément, une première canalisation de gaz 11, c'est-à-dire une conduite d'amenée de gaz, relie fluidiquement la source de NO gazeux 1 aux rampes de remplissage 3, alors qu'une deuxième canalisation de gaz 12 relie, quant à elle, fluidiquement la source d'azote gazeux 2 auxdites rampes de remplissage 3.

En fait, les première et deuxième canalisations de gaz 11, 12 sont reliées à la rampe 3 via un tronçon 13 commun de canalisation qui peut se ramifier en sous-tronçons 13a, 13b, 13c, en particulier dans sa partie aval, c'est-à-dire au niveau des rampes 3.

En particulier, la première canalisation 11 comprend une vanne de bipasse azote 30 et la deuxième canalisation comporte une vanne proportionnelle 31 permettant de réguler les débits d'azote ou de NO ; le rôle de ces vannes 30, 31 est détaillé ci-après.

Conformément à la présente invention, un débitmètre massique 4, 5 est agencé sur chacune desdites première et deuxième canalisation de gaz 11, 12 de manière à pouvoir mesurer les quantités en masse de NO et de N₂ qui les traverse.

Ces débitmètres massiques 4, 5 sont raccordés, via des lignes électriques 14, 15, à un dispositif de pilotage 6, tel un ordinateur, un automate ou analogue, comprenant une interface homme/machine permettant à un opérateur, via un écran tactile par exemple, de fixer des valeurs de consigne.

Ce dispositif de pilotage 6 met en oeuvre un logiciel de contrôle de l'installation et commande notamment les vannes 30, 31.

En fait, les débitmètres massiques 4, 5 mesurent respectivement les masses de NO et d'azote qui les traversent et transmettent ces mesures au dispositif de pilotage 6.

Le dispositif de pilotage 6 est quant à lui paramétré avec des consignes précalculées. A chaque taille de bouteille et concentration correspond un couple : masse NO, masse N₂.

Dans un premier temps, le logiciel du dispositif de pilotage 6 procède à un recalcul des consignes paramétrées en fonction des paramètres spécifiques de l'installation : configuration des vannes, volumes morts, nombre de bouteilles branchées... Ceci permet de prendre en compte la quantité de gaz qui ne se retrouve pas dans les bouteilles 25.

Lors du remplissage, on suit l'évolution de la masse introduite grâce aux débitmètres 4, 5. Le dispositif de pilotage 6 rétroagit alors, à travers un système de contrôle commande, c'est-à-dire via un signal électrique qui commande une électrovanne qui, à son tour, commande des vannes pneumatiques, sur les vannes de régulation 31 et de bipasse 30 pour arrêter le flux de gaz une fois la consigne recalculée de masse atteinte.

Dit autrement, le dispositif de pilotage 6 agit en temps réel sur les deux vannes 30, 31, à savoir sur la vanne de régulation 31 qui a une section de passage très faible de manière à contrôler de façon très précise le débit de gaz allant vers les bouteilles et arrêter le débit une fois la consigne de masse atteinte, et par ailleurs sur la vanne de bipasse 30 qui est montée en parallèle de la vanne de régulation 31 et qui a, quant à elle, une section de passage beaucoup plus importante. En fait, cette vanne de bipasse 30 est ouverte en milieu de remplissage pour augmenter le débit et raccourcir le temps de remplissage.

Par ailleurs, l'installation comprend également une ligne de mise à l'air 21 reliée fluidiquement à la première canalisation de gaz 11 et communiquant avec l'atmosphère ambiante, le passage de gaz vers l'atmosphère étant contrôlé par une vanne 19 agencée sur ladite ligne de mise à l'air 21.

La canalisation de purge 33 reliant fluidiquement, via le tronçon commun 13, les rampe de remplissage 3 à une mise à l'air 34 et, par ailleurs, à la ligne de pompage 36 reliant fluidiquement une pompe à vide 32 à ladite canalisation de purge 33, de manière à pouvoir évacuer les gaz lors des phases de purge et de rinçage gazeux des bouteilles 25, comme expliqué ci-après.

En outre, l'installation comporte aussi une ligne de balayage gazeux 20 reliant fluidiquement la deuxième canalisation de gaz 12 acheminant l'azote à la partie aval du tronçon commun 13 alimentant en gaz les rampes 3 et par ailleurs aussi à la partie amont de la première canalisation de gaz 11 véhiculant le mélange à base de NO.

Comme illustré en figure 3, la ligne de balayage gazeux 20 vient se raccorder, du côté amont 20a, à la deuxième canalisation de gaz 12 et, en aval, en 20c, à la première canalisation de gaz 11, d'une part, et en 20b aux différents sous-tronçons 13a, 13b, 13c ramifiés du tronçon commun 13, d'autre part.

Cette ligne de balayage gazeux 20 permet d'empêcher les infiltrations d'air au sein des flexibles et des sous-tronçons 13a, 13b, 13c, ainsi qu'au niveau de la partie amont de la première ligne 11, c'est-à-dire au sein du raccordement de la ou des sources de NO 1 à ladite première ligne 11.

Il est à noter que les sous-tronçons 13a, 13b, 13c comprennent chacun un manomètre 38 et un capteur de pression 37.

La circulation du gaz dans les différentes canalisations est contrôlée de manière classique par un ensemble de vannes 18, y compris des vannes d'isolement, de préférence actionnées/contrôlées par le dispositif de pilotage 6. Toutefois, certaines des vannes peuvent être à actionnement manuel par l'opérateur.

Par ailleurs, la ou les sources de NO 1 sont préférentiellement agencées dans une enceinte 22, telle une armoire ou analogue.

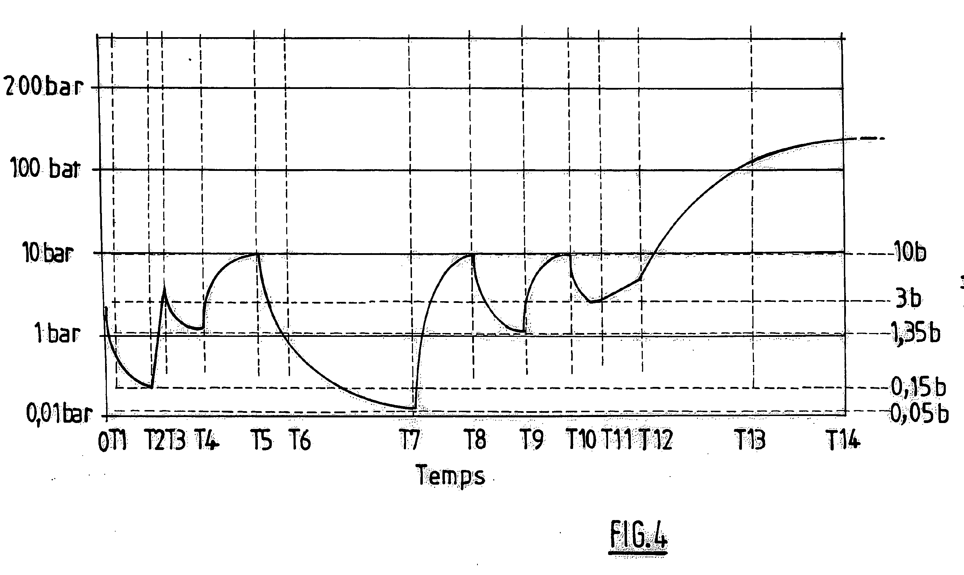

La Figure 4 annexée schématise un mode de réalisation d'un cycle de conditionnement de mélanges gazeux NO/N₂ applicable dans le cadre du procédé de conditionnement mettant en oeuvre l'installation de la présente invention, en particulier l'installation de la Figure 3.

Comme on le voit, ce cycle de conditionnement comporte plusieurs étapes successives, s'échelonnant au fil du temps de T0 à T13, qui sont appliquées simultanément à chaque bouteille 25 des différents postes de remplissage 24 de la rampe de conditionnement 3 et qui sont détaillées ci-après. Typiquement, la rampe 3 comprend de 10 à 20 bouteilles 25, par exemple 16 bouteilles.

Dans un but de simplification, le cycle sera expliqué pour une seule des bouteilles 25, bien que toutes les bouteilles 25 soient soumises simultanément audit cycle comprenant les étapes échelonnées entre les temps T0 à T13.

Entre T0 et T1, les flexibles de l'installation sont vidés à l'air libre, c'est-à-dire que le volume interne des flexibles de remplissage est mis en communication fluidique avec l'atmosphère ambiante pour évacuer toute surpression résiduelle éventuelle. Durant cette phase, le ou les robinets des récipients 25 de gaz connectés aux flexibles sont fermés, donc aucun échange de gaz n'a lieu avec le ou les récipients 25.

Entre T1 et T2, on utilise la pompe à vide 32 pour mettre l'intérieur des flexibles en dépression de branchement, c'est-à-dire à une pression inférieure à la pression atmosphérique, par exemple de l'ordre de 0,15 bar, ce qui permet d'évacuer le gaz résiduel et/ou l'air qui s'y trouvent. Cette phase est donc aussi réalisée robinet fermé. La mise sous vide des flexibles est une sécurité qui permet de vérifier le bon raccordement de tous les flexibles et l'absence de fuite. En effet, en cas de fuite ou de raccordement incorrect d'un flexible le vide ne sera pas établi de manière stable.

Entre T2 et T3, l'opérateur ouvre le robinet de chaque bouteille 25 et la pression résiduelle présente dans chaque bouteille 25 remonte alors jusqu'au capteur de pression 37, lequel détecte ladite remontée de pression. Typiquement, la pression résiduelle de la bouteille 25 est de l'ordre d'environ 3 à 4 bar absolus. Après T2, aucun rinçage gazeux du récipient 25 avec de l'azote n'a encore eu lieu.

Entre T3 et T4, commence le traitement proprement dit de chaque bouteille 25. Plus précisément, chaque bouteille 25 est à mise à l'atmosphère, c'est-à-dire qu'on laisse s'échapper le gaz contenu dans la bouteille 25 vers l'atmosphère extérieur 34, via la ligne 33, sous le simple effet de la différence de pression entre intérieur et extérieur de la bouteille de manière à porter la pression interne de la bouteille à la pression atmosphérique. A T4, la pression interne de la bouteille 25 de gaz est donc sensiblement égale à la pression atmosphérique, c'est-à-dire de l'ordre de 1 à 1,5 bar absolus.

Entre T4 et T5, la bouteille 25 subit un rinçage avec de l'azote provenant de la source 2 pendant lequel sa pression interne est portée à environ 10 bar. L'adjonction d'azote se fait via la deuxième canalisation de gaz 12 alimentée par le stockage 2 d'azote sous pression de manière à porter la pression interne de la bouteille à la pression désirée.

Entre T5 et T6, l'azote contenu dans chaque bouteille 25 est à nouveau échappé à l'atmosphère (en 34), ce qui permet d'éliminer les impuretés éventuellement présentes dans la bouteille.

Entre T6 et T7, la bouteille est purgée par mise en dépression de son volume interne par soutirage du gaz résiduel qui s'y trouve au moyen de la pompe à vide 32 et de la ligne de pompage 36 jusqu'à obtenir une dépression interne inférieure à 0,2 bar abs, de préférence inférieure à 0,1 bar, par exemple de l'ordre de 0,05 bar.

Entre T7 et T8, la bouteille subit, comme précédemment, un nouveau rinçage à l'azote jusqu'à porter sa pression interne à 10 bar environ, comme entre T4 et T5.

Entre T8 et T9, la bouteille 25 subit un nouvel échappement (en 34) vers l'atmosphère ambiant comme pendant les temps T5 et T6. La pression résiduelle gazeuse est alors maintenue à environ 1,35 bar pour éviter une entrée intempestive de contaminants atmosphériques.

Entre T9 et T10, la bouteille subit encore un rinçage supplémentaire à l'azote jusqu'à porter sa pression interne à 10 bar environ, comme précédemment.

Entre T10 et T11, l'azote est échappé à l'atmosphère, comme entre T8 et T9 et entre T5 et T6, mais en maintenant cette fois une pression résiduelle interne de l'ordre de 3 bar.

Entre T11 et T12, on introduit dans chaque bouteille 25, un prémélange gazeux formé de NO et de N₂ contenant une teneur en NO inférieure à 10% en volume jusqu'à atteindre une première pression de remplissage P1 avec P1 > 1 bar, typiquement une pression P1 de l'ordre de 2 à 10 bar abs, préférentiellement de 3 à 5 bar abs environ, par exemple une pression P1 de l'ordre de 4 bar. Avantageusement, le prémélange gazeux formé de NO et de N₂ contient une teneur en NO de l'ordre de 4 % en volume. Le prémélange gazeux formé de NO et de N₂ provient des bouteilles 1 et est acheminé par la première canalisation 11 puis par le tronçon commun 13, 13a, 13b, 13c.

Entre T12 et T13, on introduit ensuite dans le récipient contenant le prémélange NO/N₂ à la première pression P1, de l'azote gazeux acheminé par la deuxième canalisation 112 puis par le tronçon commun 13, 13a, 13b, 13c, jusqu'à obtenir un mélange gazeux final NO/N₂ contenant une teneur en NO inférieure ou égale à 1200 ppm en volume, par exemple une teneur finale de NO de 200 à 800 ppm, et une deuxième pression P2 comprise entre P1 et 800 bar, par exemple ici une pression de 180 à 200 bar.

La régulation des quantités de gaz (N₂ et NO/N₂) introduites dans les bouteilles se fait grâce aux débitmètres massiques 4, 5, aux vannes de bipasse 30 et proportionnelle de régulation de débit 31, ainsi qu'au dispositif de pilotage 6 comme expliqué ci-dessus.

Les mélanges gazeux NO/N₂ ainsi fabriqués pourront être utilisés pour traiter les vasoconstrictions pulmonaires chez l'adulte ou l'enfant, en particulier chez les nouveaux nés souffrant d'hypertension pulmonaire primitive ou chez les patients subissant une opération de chirurgie cardiaque.

## Revendications

1. Installation de conditionnement d'un mélange gazeux NO/N₂ dans au moins un récipient comprenant :
- une source de NO gazeux (1),
- une source d'azote gazeux (2),
- au moins une rampe de remplissage (3) comprenant un ou plusieurs postes de remplissage (24) pour récipients (25) de gaz,
- une première canalisation de gaz (11) reliant fluidiquement la source de NO gazeux (1) à ladite au moins une rampe de remplissage (3), et
- une deuxième canalisation de gaz (12) reliant fluidiquement la source d'azote gazeux (1) à ladite au moins une rampe de remplissage (3),
**caractérisée en ce que** :
- la source de NO gazeux (1) contient un prémélange gazeux formé de NO et d'azote, et
- la première canalisation de gaz (11) et la deuxième canalisation de gaz (12) comprennent chacune un débitmètre massique (4, 5), chaque débitmètre massique (4, 5) étant raccordé (14, 15) à un dispositif de pilotage (6) coopérant avec chaque débitmètre massique (4, 5).

2. Installation selon la revendication précédente, **caractérisée en ce que** la source de NO (1) contient un prémélange gazeux formé de NO et de N₂ contenant une teneur en NO inférieure à 10% en volume, de préférence le prémélange contient une teneur en NO inférieure ou égale à 5% en volume.

3. Installation selon l'une des revendications précédentes, **caractérisée en ce que** la première canalisation de gaz (11) et la deuxième canalisation de gaz (12) sont reliées fluidiquement à ladite au moins une rampe de remplissage (3) par l'intermédiaire d'un tronçon de canalisation (13) commun.

4. Installation selon la revendication 3, **caractérisée en ce que** le tronçon de canalisation (13) commun se ramifie en plusieurs sous-tronçons (13a à 13c).

5. Installation selon l'une des revendications 1, 3 ou 4, **caractérisée en ce qu'**elle comprend une ligne de balayage gazeux (20) reliant (en 20a) fluidiquement la deuxième canalisation de gaz (12) à la partie aval (en 20b) du tronçon commun (13) alimentant en gaz au moins une rampe (3) de remplissage et à la partie amont (en 20c) de la première canalisation de gaz (11).

6. Installation selon la revendication 5, **caractérisée en ce que** la ligne de balayage gazeux (20) relie (en 20a) fluidiquement la deuxième canalisation de gaz (12) auxdits sous-tronçons (13a à 13c) alimentant en gaz plusieurs rampes (3) de remplissage.

7. Installation selon la revendication 1, **caractérisée en ce que** le dispositif de pilotage (6) reçoit de chaque débitmètre massique (4, 5) des signaux de masse de gaz représentatif de la masse de gaz traversant chaque débitmètre massique (4, 5).

8. Installation selon la revendication 7, **caractérisée en ce que** le dispositif de pilotage (6) est conçu pour et apte à utiliser lesdits signaux de masse de gaz représentatif de la masse de gaz traversant chaque débitmètre massique (4, 5) pour calculer une ou plusieurs consigne de masse cible.

9. Installation selon l'une des revendications précédentes, **caractérisée en ce que** le dispositif de pilotage (6) agit sur une vanne de régulation (31) pour contrôler le débit de gaz allant vers la ou les rampes (3) de remplissage et d'arrêter le débit une fois au moins une consigne de masse atteinte.

10. Installation selon l'une des revendications précédentes, **caractérisée en ce que** le dispositif de pilotage (6) agit en outre sur une vanne bipasse (30), de préférence montée en parallèle de la vanne de régulation (31), pour augmenter le débit de gaz allant vers la ou les rampes (3).

11. Installation selon l'une des revendications précédentes, **caractérisée en ce que** le dispositif de pilotage (6) comprend un ordinateur ou un automate.

12. Installation selon l'une des revendications 4 à 6, **caractérisée en ce qu'**une canalisation de purge (33) est raccordée fluidiquement au tronçon commun (13) de canalisation ou aux sous-tronçons (13a-13c).

13. Installation selon l'une des revendications 3 à 6 et 12, **caractérisée en ce que** la canalisation de purge (33) comprend une sortie vers l'atmosphère (34) et/ou est reliée fluidiquement à une ligne de pompage (36) comprenant une pompe à vide (32).

14. Installation selon l'une des revendications précédentes, **caractérisée en ce que** ladite au moins une rampe de remplissage (3) comprend des organes de raccordement permettant de raccorder plusieurs récipients (25) à la fois, de préférence de 1 à 20 bouteilles de gaz.

15. Procédé de conditionnement d'un mélange gazeux NO/N₂ dans un ou plusieurs 10 récipients de gaz (25), dans lequel on met en oeuvre une installation selon l'une des revendications précédentes pour remplir le ou les récipients de gaz (25), les proportions de NO et de N₂ introduites dans le ou les récipients de gaz (25) étant déterminées au moyen de débitmètres massiques (4, 5).

## Patentansprüche

1. Anlage zum Konditionieren eines gasförmigen NO/N₂-Gemischs in wenigstens einem Behälter, umfassend:
- eine Quelle gasförmigen NO (1),
- eine Quelle gasförmigen Stickstoffs (2),
- wenigstens eine Füllrampe (3), die eine oder mehrere Befüllstationen (24) für Gasbehälter (25) umfasst,
- eine erste Gasleitung (11) zur fluidischen Verbindung der Quelle gasförmigen NO (1) mit der wenigstens einen Füllrampe (3) und
- eine zweite Gasleitung (12) zur fluidischen Verbindung der Quelle gasförmigen Stickstoffs (1) mit der wenigstens einen Füllrampe (3),
**dadurch gekennzeichnet, dass**
- die Quelle gasförmigen NO (1) ein gasförmiges Vorgemisch enthält, das aus NO und aus Stickstoff gebildet ist,
und
- die erste Gasleitung (11) und die zweite Gasleitung (12) jeweils einen Massendurchflussmesser (4, 5) umfassen, wobei jeder Massendurchflussmesser (4, 5) mit einer Ansteuervorrichtung (6) verbunden (14, 15) ist, die mit jedem Massendurchflussmesser (4, 5) zusammenwirkt.

2. Anlage nach dem vorhergehenden Anspruch, **dadurch gekennzeichnet, dass** die Quelle gasförmigen NO (1) ein gasförmiges Vorgemisch enthält, das aus NO und aus N₂ gebildet ist und einen NO-Gehalt aufweist, der kleiner als 10 Volumen-% ist, wobei das Vorgemisch bevorzugt einen NO-Gehalt aufweist, der kleiner oder gleich 5 Volumen-% ist.

3. Anlage nach einem der vorhergehenden Ansprüche, **dadurch gekennzeichnet, dass** die erste Gasleitung (11) und die zweite Gasleitung (12) mit der wenigstens einen Füllrampe (3) über einen gemeinsamen Leitungsabschnitt (13) fluidisch verbunden sind.

4. Anlage nach Anspruch 3, **dadurch gekennzeichnet, dass** der gemeinsame Leitungsabschnitt (13) sich in mehrere Unterabschnitte (13a bis 13c) verzweigt.

5. Anlage nach einem der Ansprüche 1, 3 oder 4, **dadurch gekennzeichnet, dass** sie eine Gasspülleitung (20) für die fluidische Verbindung (in 20a) der zweiten Gasleitung (12) mit dem stromabwärtigen Teil (in 20b) des gemeinsamen Abschnitts (13), welcher wenigstens eine Füllrampe (3) mit Gas versorgt, und (in 20c) mit dem stromaufwärtigen Teil der ersten Gasleitung (11) umfasst.

6. Anlage nach Anspruch 5, **dadurch gekennzeichnet, dass** die Gasspülleitung (20) die zweite Gasleitung (12) (in 20a) mit den Unterabschnitten (13a bis 13c), die mehrere Füllrampen (3) mit Gas versorgen, fluidisch verbindet.

7. Anlage nach Anspruch 1, **dadurch gekennzeichnet, dass** die Ansteuervorrichtung (6) von jedem Massendurchflussmesser (4, 5) Signale für die Gasmasse empfängt, die für die Gasmasse repräsentativ ist, die jeden Massendurchflussmesser (4, 5) durchquert.

8. Anlage nach Anspruch 7, **dadurch gekennzeichnet, dass** die Ansteuervorrichtung (6) ausgelegt und geeignet ist, um die Signale für die Gasmasse, die für die Gasmasse repräsentativ ist, die jeden Massendurchflussmesser (4, 5) durchquert, zu verwenden, um einen oder mehrere Zielmassesollwerte zu berechnen.

9. Anlage nach einem der vorhergehenden Ansprüche, **dadurch gekennzeichnet, dass** die Ansteuervorrichtung (6) auf ein Regelventil (31) einwirkt, um den Gasdurchfluss zu der oder den Füllrampen (3) hin zu steuern und den Durchfluss zu sperren, sobald wenigstens ein Massesollwert erreicht ist.

10. Anlage nach einem der vorhergehenden Ansprüche, **dadurch gekennzeichnet, dass** die Ansteuervorrichtung (6) ferner auf ein Bypass-Ventil (30) einwirkt, das bevorzugt parallel zu dem Regelventil (31) geschaltet ist, um den Gasdurchfluss zu der oder den Füllrampen (3) hin zu erhöhen.

11. Anlage nach einem der vorhergehenden Ansprüche, **dadurch gekennzeichnet, dass** die Ansteuervorrichtung (6) einen Computer oder eine Steuerung umfasst.

12. Anlage nach einem der Ansprüche 4 bis 6, **dadurch gekennzeichnet, dass** eine Entlüftungsleitung (33) mit dem gemeinsamen Leitungsabschnitt (13) oder den Unterabschnitten (13a bis 13c) fluidisch verbunden ist.

13. Anlage nach einem der Ansprüche 3 bis 6 und 12, **dadurch gekennzeichnet, dass** die Entlüftungsleitung (33) einen Ausgang in die Atmosphäre (34) umfasst und/oder mit einer Pumpleitung (36), die eine Vakuumpumpe (32) umfasst, fluidisch verbunden ist.

14. Anlage nach einem der vorhergehenden Ansprüche, **dadurch gekennzeichnet, dass** die wenigstens eine Füllrampe (3) Verbindungsorgane für die Verbindung von mehreren Behältern (25) gleichzeitig, bevorzugt von 1 bis 20 Gasflaschen, umfasst.

15. Verfahren zum Konditionieren eines gasförmigen NO/N₂-Gemischs in einem oder mehreren Gasbehältern (25), wobei eine Anlage nach einem der vorhergehenden Ansprüche zum Befüllen des oder der Gasbehälter (25) verwendet wird, wobei die Anteile von NO und N₂, die in den oder die Gasbehälter (25) eingebracht werden, mit Hilfe von Massendurchflussmessern (4, 5) bestimmt werden.

## Claims

1. Installation for packaging a NO/N₂ gas mixture in at least one container comprising:
- a source (1) of NO gas,
- a source (2) of nitrogen gas,
- at least one filling manifold (3) comprising one or more filling stations (24) for gas containers (25),
- a first gas line (11) fluidically connecting the source (1) of NO gas to said at least one filling manifold (3), and
- a second gas line (12) fluidically connecting the source (1) of nitrogen gas to said at least one filling manifold (3),
**characterised in that**:
- the source (1) of NO gas contains a gas premix of NO and nitrogen, and
- the first gas line (11) and the second gas line (12) each comprise a mass flow meter (4, 5), each mass flow meter (4, 5) being connected (14, 15) to a control device (6) cooperating with each mass flow meter (4, 5).

2. Installation according to the preceding claim, **characterised in that** the source (1) of NO contains a gas premix formed of NO and of N₂ having an NO content of less than 10 % by volume, the premix preferably having an NO content which is less than or equal to 5 % by volume.

3. Installation according to either of the preceding claims, **characterised in that** the first gas line (11) and the second gas line (12) are fluidically connected to said at least one filling manifold (3) by a common line portion (13).

4. Installation according to claim 3, **characterised in that** the common line portion (13) branches into a plurality of subportions (13a to 13c).

5. Installation according to any of claims 1, 3 or 4, **characterised in that** it comprises a gas flushing line (20) fluidically connecting (at 20a) the second gas line (12) to the downstream part (at 20b) of the common portion (13) supplying gas to at least one filling manifold (3) and to the upstream part (at 20c) of the first gas line (11).

6. Installation according to claim 5, **characterised in that** the gas flushing line (20) fluidically connects (at 20a) the second gas line (12) to said subportions (13a to 13c) supplying gas to a plurality of filling manifolds (3).

7. Installation according to claim 1, **characterised in that** the control device (6) receives, from each mass flow meter (4, 5), gas mass signals which are indicative of the mass of gas passing through each mass flow meter (4, 5).

8. Installation according to claim 7, **characterised in that** the control device (6) is configured and suitable for using said gas mass signals which are indicative of the mass of gas passing through each mass flow meter (4, 5) for calculating one or more target mass set points.

9. Installation according to any of the preceding claims, **characterised in that** the control device (6) acts on a regulating valve (31) for controlling the flow of gas heading towards the filling manifold or manifolds (3) and for stopping the flow once at least one mass set point has been reached.

10. Installation according to any of the preceding claims, **characterised in that** the control device (6) also acts on a bypass valve (30), which is preferably mounted in parallel with the regulating valve (31), for increasing the flow of gas heading towards the manifold or manifolds (3).

11. Installation according to any of the preceding claims, **characterised in that** the control device (6) comprises a computer or controller.

12. Installation according to any of claims 4 to 6, **characterised in that** a flushing line (33) is fluidically connected to the common line portion (13) or to the subportions (13a-13c).

13. Installation according to any of claims 3 to 6 and 12, **characterised in that** the flushing line (33) comprises an outlet to the atmosphere (34) and/or is fluidically connected to a pumping line (36) comprising a vacuum pump (32).

14. Installation according to any of the preceding claims, **characterised in that** said at least one filling manifold (3) comprises connection members allowing a plurality of containers (25) to be connected at a time, preferably from 1 to 20 gas cylinders.

15. Method for packaging an NO/N₂ gas mixture in one or more gas containers (25), wherein an installation according to any of the preceding claims is used to fill the gas container or containers (25), the proportions of NO and of N₂ introduced into the gas container or containers (25) being determined by means of mass flow meters (4, 5).
